# EUROPÄISCHE PATENTANMELDUNG

(11) **EP 0 940 668 A1**
(43) Veröffentlichungstag der Anmeldung: **08.09.1999**
(21) Anmeldenummer: 99103764.9
(22) Anmeldetag: 26.02.1999
(51) Int. Cl.: G01N 11/06, B22C 23/02, G01F 1/24

(54) **Verfahren zur Messung und/oder Überwachung des Homogenisierungszustandes einer Suspension**

(30) Priorität: 05.03.1998 DE 19809530
(71) Anmelder: Dipl.-Ing. Laempe GmbH, 79650 Schopfheim (DE)
(72) Erfinder: Laempe, Joachim, 79692 Raich (DE)
(74) Vertreter: Schmitt, Hans, Dipl.-Ing.

(57) **Zusammenfassung**

Zur Messung und/oder Überwachung des Homogenisierungszustandes einer Suspension (3) oder Schlichte in der Gießereitechnik wird die Zeit gemessen, die eine vorgegebene Menge dieser Suspension (3) bei einem Fließen benötigt, wobei ein Meßgefäß oder Meßrohr (1) mit der zu prüfenden Suspension (3) gefüllt wird, also diese Suspension (3) von unten nach oben fließt, so daß die Füllstandszunahme in einer Meßstrecke erfaßt werden kann. Dabei wird die Zeit für einen vorgegebenen Füllungsgrad dieser Meßstrecke ermittelt und mit einer Referenzzeit verglichen, die sich beim Einfüllen einer optimalen Vergleichs-Suspension (3) bei gleichem Füllungsgrad ergeben würde oder ergibt. Zweckmäßigerweise erfolgt dabei die Füllung der Meßstrecke mit einer gleichmäßigen oder laminaren Strömung insbesondere durch Einsaugen der Suspension, wobei sie von unten her in die Meßstrecke eintritt und nach oben abgesaugt wird.

## Beschreibung

Die Erfindung betrifft ein Verfahren zur Messung und/oder Überwachung des Homogenisierungszustandes einer Suspension oder Schlichte in der Gießereitechnik, welche aus einem pulverförmigen, feuerfesten Füllstoff, einem bindenden Werkstoff sowie einer Trägerflüssigkeit, zum Beispiel Wasser oder Alkohol, besteht, wobei die Zeit gemessen wird, die eine vorgegebene Menge der Suspension oder Schlichte bei einem Fließen benötigt und eine gegenüber einer Referenzzeit zu lange Zeit eine zu dick aufbereitete und eine zu kurze Zeit eine zu dünne Suspension oder Schlichte - im folgenden auch wahlweise nur Suspension oder nur Schlichte genannt - bedeutet.

In der Gießereitechnik werden Suspensionen auf Wasser- oder Alkoholbasis verwendet, die dabei auch als "Schlichten" bezeichnet werden. Sie dienen dazu, feuerfeste Überzüge für Gießereiformen oder -kerne zu bilden. Eine solche Schlichte besteht aus pulverförmigem feuerfesten Füllstoff wie zum Beispiel Talkum, Grafit, Zirkonsandmehl usw., aus bindendem Material wie Harz, Wasserglas, Bentonit usw. sowie aus der schon erwähnten Trägerflüssigkeit, nämlich Wasser oder Alkohol. Sie erfüllt dabei die Forderung, die Rauigkeit der späteren Gußstückoberfläche zu reduzieren und eine Barriere für die aus der Gießereiform durch die Hitze der Schmelze abgespaltenen Gase zu bilden, wobei die Bildung von Gasblasen und Gasporositäten während der Erstarrung des Gußkörpers unterdrückt werden sollen. Außerdem werden durch die Schlichte unerwünschte Reaktionen an der Grenze zwischen dem flüssigen Metall und der Gießereiform oder dem Gießereikern verhindert, die sonst zu Oberflächenfehlern am Gußstück führen könnten.

Dabei kann die Schlichte diese Forderungen nur dann gut erfüllen, wenn sie möglichst optimal aufbereitet ist. Nach der Aufbereitung muß dazu der Homogenisierungszustand der Schlichte oder Suspension sowohl räumlich als auch zeitlich aufrechterhalten bleiben, damit sich keine Füllstoffkomponenten wieder absetzen.

Die meßbaren physikalischen Eigenschaften einer aufbereiteten derartigen Schlichte sind das spezifische Volumen, die Viskosität und die Schutzschichtdicke auf der Oberfläche eines geschlichteten Gießereikernes bzw. einer geschlichteten Gießereiform. Somit ergibt sich die Notwendigkeit, die Schlichte auf die Einhaltung dieser Eigenschaften zu prüfen.

Es sind bereits Meßverfahren und Meßvorrichtungen bekannt, die für eine periodische Kontrolle des spezifischen Volumens der Schlichte (Suspension) geeignet sind. Dabei wird eine representative Stichprobe der Schlichte entnommen und abgewogen. Die Gewichtsmessungen werden mit einer Waage mit Genauigkeiten von ein bis zwei Stellen hinter dem Komma sowie mit einem Meßbecher mit konstantem Volumen durchgeführt. Dabei kann jedoch das Meßergebnis durch Klumpen von Füllstoff verfälscht werden. Darüber hinaus müssen diese Messungen manuell durchgeführt werden, was zeitaufwendig ist, da sie normalerweise in einem Labor durchgeführt werden müssen. Ferner unterliegen sie dadurch subjektiven Fehlern.

Es ist ferner bekannt, die Viskosität der Schlichte (Suspension) durch Messung der sogenannten Auslaufzeit aus genormten Meßbechern mit konstantem Auslaufquerschnitt (z.B. 4 bis 5 mm Durchmesser) zu kontrollieren. Da es einen unmittelbaren Zusammenhang Zwischen der Viskosität und der Dicke der Schlichteschicht auf der Oberfläche einer Gießereiform oder eines Gießereikernes gibt, kann mit Hilfe der Viskositätsmessung eine bessere Qualitätskontrolle des Homogenisierungszustandes dieser Schlichte oder Suspension als mit Hilfe der Messung des spezifischen Volumens durchgeführt werden.

Die Überwachung oder Kontrolle der Viskosität durch Messung einer Auslaufzeit mit genormten Auslaufbechern wirft jedoch ebenfalls Probleme auf. So kann während der Messung der auslaufende Strahl der Schlichte durch Füllstoffklumpen eingeschnürt werden, was die Auslaufzeit verlängert, also das Meßergebnis verfälscht. Außerdem sind Meßbecher mit unterschiedlichen Auslaufquerschnitten im Gebrauch, so daß die statistischen Daten für verschiedene oder gleiche Produkte nicht immer miteinander verglichen werden können.

Manuell durchgeführte Messungen der Auslaufzeit haben einen subjektiven Charakter. Das Starten und Stoppen der Meßuhr unterliegt der subjektiven Entscheidung und Tätigkeit des Bedieners, was zu jeweils etwas abweichenden oder gar verfälschten Meßergebnissen führen kann. Auf jeden Fall ist also für die Durchführung solcher Messungen erfahrenes Personal erforderlich.

Der Erfindung liegt deshalb die Aufgabe zugrunde, ein Verfahren der eingangs genannten Art zu schaffen, mit welchem Kontrollmessungen in kürzest möglicher Zeit auch automatisch durchgeführt werden können, so daß Abweichungen in der Schlichtequalität vom geforderten oder vom Normalzustand schnell erkannt und möglichst automatisch korrigiert werden können.

Der Erfindung liegt ferner die Aufgabe zugrunde, eine Vorrichtung zum Überwachen des Homogenisierungszustandes von Suspensionen für die Gießereitechnik, welche Suspension oder Schlichte wenigstens einen pulverförmigen, feuerfesten Füllstoff, bindendes Material sowie eine Trägerflüssigkeit umfaßt und daraus gemischt ist, zu schaffen, mit der Kontrollmessungen schnell, zum Beispiel im Sekundenbereich und insbesondere automatisch durchgeführt werden können, damit Abweichungen der Qualität der Schlichte von einem erwünschten oder normalen Zustand schnell erkannt und möglichst automatisch korrigiert werden können.

Zur Lösung der Aufgabe ist das eingangs erwähnte Verfahren dadurch gekennzeichnet, daß ein Meßgefäß oder Meßrohr mit der zu prüfenden Schlichte gefüllt, die Füllstandszunahme erfaßt, die Zeit für einen vorgegebenen Füllungsgrad ermittelt und mit einer Referenzzeit verglichen wird, die sich beim Einfüllen einer optimalen Schlichte oder Suspension in das Meßgefäß oder -rohr mit gleichem Füllungsgrad ergibt.

Eine solche Verfahrensweise kann automatisiert werden, weil ein immer gleiches Meßgefäß oder Meßrohr mit der zu untersuchenden Schlichte gefüllt wird, wobei der Füllungszustand mit üblichen Mitteln erfaßt werden kann, so daß auch der Zeitbedarf dafür automatisch gemessen und mit einer vorgegebenen Zeit für eine optimale Schlichte verglichen werden kann. Bei einer entsprechenden Anordnung eines Meßgefäßes oder Meßrohres mit Füllungsorganen, Füllstandsmeßvorrichtungen und Zeitmessung ist also eine automatisierte und damit objektivierte Überwachung der Schlichte oder Suspension möglich.

Dabei ist es für möglichst genaue Meßergebnisse zweckmäßig, wenn die Suspension in das Meßgefäß oder Meßrohr mit einer laminaren Strömung und einer konstanten Druckdifferenz zwischen der Zuführleitung und dem Meßgerät oder Meßrohr eingefüllt wird. Dies vergleichmäßigt den Kontroll- und Meßvorgang und verhindert Abweichungen aufgrund von Turbulenzen. Darüber hinaus werden die Meßergebnisse aufgrund der konstanten Druckdifferenz gut mit Referenzwerten vergleichbar.

Das Verfahren kann dabei zweckmäßigerweise im Sinne einer möglichst gut wiederholbaren Füllung und Messung dadurch günstig gestaltet werden, daß die Suspension beim Einfüllen in das Meßgefäß oder -rohr in dieses eingesaugt wird. Dadurch läßt sich die Strömung und die Strömungszeit besonders gut auf einen gleichbleibenden Wert einstellen und darüber hinaus kann auf diese Weise ein besonders objektiver Vergleich mit einer Referenzzeit beim Einfüllen einer Normalsuspension oder dergleichen durchgeführt werden. Insbesondere erfolgt beim Einsaugen das Einfüllen mit einer laminaren Strömung, die ein besonders genaues Ermitteln unterschiedlicher Füllungszustände, insbesondere das Erfassen zu Beginn und am Ende einer festgelegten Füllstrecke und die dazu erforderliche Füllzeit erlaubt.

Für eine gleichmäßige und von Turbulenzen freie Füllung ist es besonders vorteilhaft, wenn das Meßgefäß oder Meßrohr zumindest im Bereich seiner Meßstrecke von unten nach oben verlaufend angeordnet und von unten her befüllt wird. Die Säule der Suspension steigt dann von einem unteren Anfang der Meßstrecke bis zu dem oberen Ende gleichmäßig hoch, wobei vor allem diese beiden Stellen mit Hilfe einer Füllstandsmessung erfaßt werden müssen, wobei gleichzeitig die Zeit gemessen wird, die vergeht, bis von dem unteren Füllstand ausgehend der obere Füllstand erreicht wird. Stimmt die gemessene Zeit mit der Referenzzeit überein, ist die Suspension oder Schlichte in Ordnung, dauert die Füllung länger, ist sie zu dickflüssig und ist die gemessene Zeit kürzer, ist die Suspension oder Schlichte zu dünn.

Dabei wird zweckmäßigerweise die Zeit gemessen, die der obere Spiegel der Suspension zum Ansteigen von einem unteren Ausgangspunkt oder Grenzschalter zu einem oberen Endpunkt oder Grenzschalter beim Einfüllen in die Meßstrecke benötigt. Dieser obere Spiegel der Suspension läßt sich in einer Meßstrecke eines Meßgefäßes oder Meßrohres gut zum Beispiel mit den erwähnten Grenzschaltern beliebiger Bauart erkennen und erfassen, wobei das Ansprechen des unteren Grenzschalters den Beginn der Zeitmessung und das Ansprechen des oberen Grenzschalters das Ende der Zeitmessung bedeutet und steuert.

Die ermittelte Zeit kann mit einem Sollwert für die Füllzeit insbesondere in einem Steuer- oder Regelgerät verglichen werden und im Falle einer zu langen Füllzeit kann Verdünnung und im Falle einer zu kurzen Füllzeit dickflüssigere Suspension zu der zu benutzenden Suspension zugemischt werden. Somit kann die Messung und Kontrolle gleichzeitig auch zur Korrektur der Suspension oder Schlichte benutzt werden, wobei dies in vorteilhafter Weise selbsttätig und automatisch mit Hilfe eines Steuer- oder Regelgerätes geschehen kann.

Das erfindungsgemäße Verfahren erlaubt nicht nur eine automatische Kontrolle der Suspension oder Schlichte, sondern ermöglicht es auch, daß die Meßstrecke von Zeit zu Zeit, insbesondere nach jeder Messung, mit der Trägerflüssigkeit der Suspension gespült und dadurch die Meßstrecke automatisch gereinigt wird. Dadurch kann eine noch so geringe Verfälschung eines Meßergebnisses durch Rückstände einer vorhergehenden Messung innerhalb der - bevorzugt vertikalen - Meßstrecke vermieden werden. Die Verwendung von Trägerflüssigkeit der Suspension hat dabei den Vorteil, daß deren eventuelle Rückstände zu der Suspension passen und diese ergänzen können.

Die zum Spülen der Meßstrecke dienende Trägerflüssigkeit kann in den Vorratsbehälter der Suspension geleitet werden. Nach dem Spülen enthält die Trägerflüssigkeit mehr oder weniger geringe Bestandteile der Suspension, die auf diese Weise in den Vorratsbehälter zurückgelangen.

Die geringfügige Menge an Spülflüssigkeit kann dabei die Suspension in dem Vorratsbehälter gegebenenfalls aufbereiten. Sollte im Laufe der Zeit die Suspension in dem Vorratsbehälter, die immer wieder ergänzt werden kann, zu dünn werden, wird dies durch das erfindungsgemäße Verfahren automatisch erfaßt und durch Zugabe dickerer Suspension reguliert.

Als Referenzzeit für den automatischen Meß- und Kontrollvorgang kann die optimale Auslaufzeit der Suspension oder Schlichte aus einem Meßbehälter oder Meßbecher experimentell ermittelt werden und als Füll- oder Ansaugzeit kann für diese optimale Suspension oder Schlichte die ermittelte Auslaufzeit verwendet werden. Viele Hersteller von Suspensionen geben die optimale Auslaufzeit von vorneherein an, haben also die experimentelle Ermittlung dieser Auslaufzeit schon durchgeführt, so daß der Verwender bereits eine entsprechende Referenzzeit zur Verfügung gestellt bekommt.

Die Vorrichtung zur Lösung der Aufgabe ist erfindungsgemäß dadurch gekennzeichnet, daß ein Meßgefäß oder Meßrohr mit einer von unten nach oben gerichteten Meßstrecke und einem Einlaß sowie einem Auslaß für die Suspension vorgesehen ist und daß an der Meßstrecke Grenzschalter für die Füllstandhöhe vorgesehen sind, die mit einem Zeitmeßgerät derart gekoppelt sind, daß die zum Füllen von einem Grenzschalter zu dem anderen benötigte Zeit erfaßbar ist.

Eine derartige Vorrichtung ist einfach im Aufbau und erlaubt eine schnelle, auf Wunsch automatische Kontrolle einer Suspension, die problemlos aus einem Vorratsbehälter abgezweigt und auch wieder in ihn zurückgeleitet werden kann.

Besonders günstig ist es, wenn ein vertikal angeordnetes Meßgefäß oder Meßrohr vorgesehen ist, in dessen unterem Bereich der Beginn der Meßstrecke und der Einlaß für die Suspension und an dessen Oberseite der Auslaß angeordnet sind, wobei zum Füllen eine Pumpe dient. Die Meßstrecke wird also mit der Suspension von unten nach oben gefüllt, was eine gleichmäßige Verschiebung des oberen Spiegels dieser Flüssigkeit innerhalb der Meßstrecke ermöglicht, so daß die Zeit, die dieser obere Spiegel der Suspension innerhalb der Meßstrecke von deren unteren Beginn bis zu ihrem oberen Ende benötigt, genau und auch automatisch ermittelt werden kann.

Die zum Füllen dienende Pumpe kann eine Saugpumpe sein, die in einer von dem Auslaß des Meßgefäßes oder Meßrohres ausgehenden Leitung angeordnet ist. Somit kann die Suspension in die Meßstrecke eingesaugt werden, was zu einer besonders ruhigen, insbesondere laminaren Strömung führt, so daß also keine Turbulenzen der Strömung eine Verfälschung des Meßergebnisses bewirken können.

Zeckmäßig ist es für die erfindungsgemäße Vorrichtung, wenn ein Vorratsbehälter für die Suspension vorgesehen ist, von welchem eine Leitung zu dem unteren, insbesondere an der Unterseite angeordneten Einlaß des Meßgefäßes oder Meßrohres führt, und wenn die Auslaßleitung der Saugpumpe in den Vorratsbehälter führt oder mündet. Die zum Messen dienende Suspension kann also aus dem Vorratsbehälter direkt entnommen bzw. angesaugt und nach der Messung auch wieder dort hin zurückgeführt werden. Somit steht die für die Messung verwendete Suspension anschließend auch für die vorgesehene Verarbeitung wieder zur Verfügung, das heißt die Messung verursacht keine Verluste an Suspension.

Zum Betätigen der Grenzschalter kann bei einer besonders zweckmäßigen und in ihrer Konstruktion einfachen Anordnung der Vorrichtung ein Schwimmer in dem Meßgefäß oder Meßrohr angeordnet sein, der insbesondere berührungslos mit den Grenzschaltern zusammenwirkt. Zwar könnte der Schwimmer auch über ein Gestänge mit entsprechenden End- oder Grenzschaltern zusammenwirken, jedoch erlaubt die berührungslose Ausführung ein geschlossenes Meßgefäß und dennoch eine präzise Messung.

Dabei kann der Schwimmer wenigstens teilweise aus Metall bestehen oder Metall enthalten und mit induktiven Grenzschaltern zusammenwirken. Beispielsweise kann der Schwimmer ein metallischer Hohlkörper sein. Metall kann besonders gut mit induktiven Grenzschaltern zusammenwirken. Es ist aber auch möglich, daß optisch wirksame Grenzschalter, insbesondere Lichtschranken oder dergleichen, zum Zusammenwirken mit einem Schwimmer vorgesehen sind. In jedem Falle zeigt ein solcher Schwimmer zuverlässig das jeweilige Niveau der Suspension oder Schlichte innerhalb der Meßstrecke an, so daß dieses und vor allem die Zeit für eine Verschiebung des Schwimmers von einer unteren in eine obere Grenzposition mit ausreichender Genauigkeit ermittelt und mit der Referenzzeit bzw. der experimentell ermittelten oder vom Hersteller angegebenen Auslaufzeit verglichen werden kann.

Weitere Ausgestaltungen der erfindungsgemäßen Vorrichtung sind Gegenstand der Ansprüche 17 bis 21 und betreffen vor allem die Vorrichtungsmerkmale, die das automatische Reinigen der Meßstrecke ermöglichen, ohne daß dadurch unerwünschte fremde Bestandteile in die Suspension eingeführt werden, weil als Spülflüssigkeit die Trägerflüssigkeit der Suspension selbst verwendet werden kann. Ferner wird angegeben, wie automatisch bei Abweichungen der durch die Messung ermittelten Zeit von der Referenzzeit die Suspension wieder optimiert werden kann.

Insgesamt ergibt sich bei Kombination einzelner oder mehrerer der vorbeschriebenen Merkmale und Maßnahmen ein Verfahren und auch eine Vorrichtung zur Überwachung des Homogenisierungszustandes einer Suspension oder Schlichte, das in der Lage ist, Kontrollmessungen im Sekundenbereich automatisch durchzuführen, so daß Abweichungen in der Qualität der Suspension oder Schlichte vom Normal- oder optimalen Zustand schnellstens erkannt und automatisch im Echtzeitbetrieb korrigiert werden können. Mit Hilfe des erfindungsgemäßen Verfahrens zur automatischen Überwachung des Homogenisierungszustandes von Suspensionen sowie mit der Vorrichtung zu seiner Durchführung ist es möglich, im Echtzeitbetrieb Stichproben homogener Schlichte oder Suspension aus einem Vorratsbehälter, zum Beispiel einem Schlichtebecken, automatisch zu entnehmen, die Viskosität dieser Stichproben durch automatische Messung der Füllzeit der Meßstrecke bzw. der Ansaugzeit zum Füllen dieser Meßstrecke zu überwachen und außerdem das Meßsystem, nämlich das Meßgefäß oder Meßrohr, die dort hinführenden und wieder wegführenden Leitungen und Schläuche sowie Ventile erforderlichenfalls unmittelbar nach jeder Messung automatisch zu reinigen, damit keinerlei Rückstand einer Messung eine nächste Messung verfälschen kann, sowie die Fördersysteme zur Zugabe von dickflüssigerer Suspension oder Schlichte oder aber Verdünnungsmittel, nämlich Trägerflüssigkeit, in den Vorratsbehälter mit homogener Suspension so lange zu aktivieren, bis in der Meßstrecke eine Füllzeit oder Ansaugzeit einem gewünschten Wert entspricht.

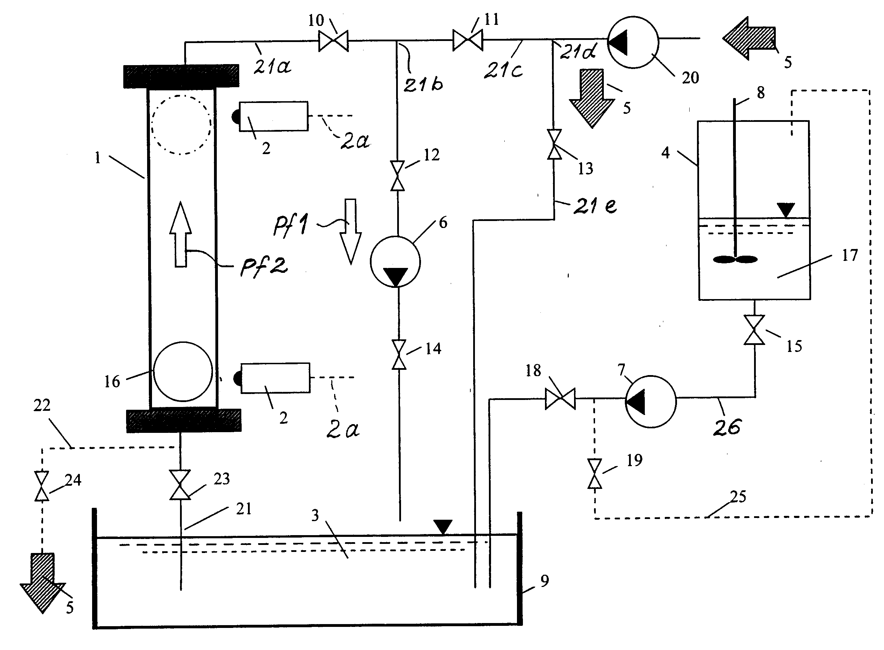

Nachstehend ist ein Ausführungsbeispiel der Erfindung anhand der Zeichnung näher beschrieben.
Die einzige Figur zeigt in schematisierter Darstellung in Form eines Blockschaltbildes eine erfindungsgemäße Vorrichtung mit einem vertikalen Meßgefäß, in welchem ein Schwimmer durch angesaugte zu untersuchende Suspension von einer unteren in eine obere Position angehoben wird, wobei für die untere und die obere Endstellung jeweils ein berührungsloser Grenzschalter vorgesehen ist, so daß der Zeitbedarf für die Verstellung des Schwimmers gemessen werden kann, wobei außerdem ein Vorratsbehälter für die Suspension, ferner ein zweiter Behälter für eine dickere Suspension und Verbindungsleitungen, Ventile und Pumpen vorgesehen sind.

In der einzigen Figur ist eine Vorrichtung dargestellt, zu der ein Meßgefäß oder Meßrohr 1 mit einer von unten nach oben gerichteten Meßstrecke gehört, an deren Außenseite für eine untere und eine obere Endstellung induktive Grenzschalter 2 vorgesehen sind. Diese Grenzschalter 2 markieren also praktisch die eigentliche Meßstrecke innerhalb des Meßgefäßes 1. Mit diesen Grenzschaltern 2 kann die Füllstandshöhe innerhalb des Meßgefäßes 1 ermittelt werden. Sie sind in nicht näher dargestellter Weise mit einem Zeitmeßgerät derart gekoppelt, daß die zum Füllen der Meßstrecke von dem unteren zu dem oberen Grenzschalter 2 benötigte Zeit erfaßt und mit einer Referenzzeit verglichen werden kann. An den Grenzschaltern 2 sind gestrichelt Leitungen 2a angedeutet, die zu einer entsprechenden SPS-Steuerung der Produktionsanlage und dabei auch zu dem Zeitmeßgerät führen.

Die mit Hilfe der Vorrichtung und dem Meßgefäß 1 sowie den Grenzschaltern 2 zu überwachende und bezüglich ihrer Viskosität oder ihres Homogenisierungszustandes zu überwachende Suspension 3 befindet sich in einem ersten Vorratsbehälter 9, von welchem eine Leitung 21 über ein Absperrventil 23 zu einem unteren, an der Unterseite des Meßgefäßes 1 angeordneten, in der schematisierten Zeichnung nicht näher dargestellten Einlaß in dieses Meßgefäß oder Meßrohr 1 führt. Demgemäß gibt es für die Meßstrecke auch einen Auslaß, der dabei an der Oberseite des Meßgefäßes oder Meßrohres angeordnet ist und an welchem eine Auslaßleitung 21a angeschlossen ist.

Somit ergibt sich ein vertikal angeordnetes Meßgefäß oder Meßrohr 1, in dessen unterem Bereich der Beginn der Meßstrecke und der Einlaß für die Suspension 3 und an dessen Oberseite der Auslaß angeordnet sind. Zum Füllen der Meßstrecke dient dabei eine Pumpe 6, die im Ausführungsbeispiel eine Saugpumpe ist und sich in der von dem Auslaß des Meßgefäßes oder Meßrohres 1 ausgehenden Leitung 21a befindet. Dabei erkennt man innerhalb dieser Leitung 21a zwischen dem Auslaß aus dem Meßgefäß 1 und einer Abzweigung 21b ein Absperrventil 10 und ferner in der durch den Pfeil Pf1 angedeuteten Strömungsrichtung vor der Saugpumpe 6 ein Absperrventil 12 sowie dahinter ein weiteres Absperrventil 14.

Zum Betätigen der Grenzschalter 2 ist im Ausführungsbeispiel ein Schwimmer 16 in dem Meßgefäß oder Meßrohr 1 angeordnet, der berührungslos mit den Grenzschaltern 2 zusammenwirkt. Dabei kann dies induktiv geschehen, wenn der Schwimmer 16 aus Metall besteht oder Metall enthält, oder es könnten auch Lichtschranken als Grenzschalter 2 vorgesehen sein, wozu vor allem hilfreich ist, wenn der Schwimmer 16 undurchsichtig oder lichtundurchlässig und insbesondere lichtreflektierend ist.

Die Leitung 21a, die in diesem Falle zum Abführen der Schlichte aus der Meßstrecke dient, aber auch umgekehrt zum Füllen von oben her herangezogen werden könnte, ist an der Abzweigung 21b mit einer Zulaufleitung 21c für Spülflüssigkeit 5 zum Reinigen der Meßstrecke verbunden, die über ein Ventil 11 abschaltbar und zuschaltbar ist. In dieser Leitung 21c befindet sich eine Förderpumpe 20, mit welcher Spülflüssigkeit 5 gemäß den sie symbolisierenden Pfeilen 5 befördert werden kann. Dabei ist zwischen der Pumpe 20 und dem Ventil 11 eine weitere Abzweigung 21d für eine Leitung 21e vorgesehen, die über ein weiteres Absperrventil 13 in den Vorratsbehälter 9 führt. Als Spülflüssigkeit 5 kann nämlich zweckmäßigerweise die Trägerflüssigkeit der Suspension verwendet werden, damit das Spülen der Meßstrecke keine die Suspension verfälschende Flüssigkeit in das System eingeführt wird. In gleicher Weise kann dann diese Flüssigkeit auch dazu herangezogen werden, eine eventuell zu dicke Suspension wieder zu verdünnen, wozu Ventil 11 geschlossen und Ventil 13 geöffnet wird, so daß die Pumpe 20 diese Flüssigkeit in die Suspension 3 innerhalb des ersten Vorratsbehälters 9 befördern kann.

In der einzigen Figur erkennt man außerdem einen zweiten Vorratsbehälter 4 für dickflüssigere Suspension 17, der über eine Leitung 26 und über eine in dieser Leitung 26 angeordnete Förderpumpe 7 sowie über Ventile 15 und 18 jeweils vor und hinter der Förderpumpe 7 mit dem ersten Vorratsbehälter 9 verbunden ist. Die Ventile 15 und 18 und die Förderpumpe 7 können durch die Steuerung oder Regelung angesteuert werden, die die Füllzeit der Meßstrecke über die Grenzwertschalter 2 ermittelt und zwar in der Weise, daß bei einer gegenüber einer vorgegebenen Referenzzeit zu kurzen Füllzeit die Ventile 15 und 18 geöffnet und die Pumpe 7 in Gang gesetzt werden, so daß die in dem ersten Vorratsbehälter 9 befindliche Suspension 3 durch dickere Suspension 17 ergänzt und ihrerseits etwas dicker wird.

In dem zweiten Vorratsbehälter 4 ist ein Rührwerk 8 angeordnet, um die Suspension in einer gleichmäßigen Homogenisierung zu erhalten. Zusätzlich oder stattdessen kann an der zu dem ersten Vorratsbehälter 9 führenden Leitung 26 hinter der Förderpumpe 7 eine Rückführleitung 25 zurück in den zweiten Vorratsbehälter 4 zum Umpumpen der dickflüssigeren Suspension abgezweigt werden, was durch eine gestrichelte Darstellung dieser Rückführleitung 25 angedeutet ist, die dann zusätzlich ein Absperrventil 19 enthält, damit sie abgesperrt werden kann, wenn dickerflüssige Suspension aus dem zweiten Behälter 4 in den ersten Vorratsbehälter 9 zur Vergrößerung der Viskosität der dort befindlichen Suspension 3 befördert werden soll.

Mit dieser Vorrichtung kann folgendermaßen gearbeitet werden:

Eine Stichprobe der homogenen Schlichte 3 wird durch Einschalten der Ansaugpumpe 6 und Öffnen der Ventile 10,12, und 14 aus dem ersten Vorratsbehälter 9 über die Leitung 21 entnommen und angesaugt. Das Ventil 11 ist dabei geschlossen. Somit füllt die Suspension 3 das Meßrohr 1 gemäß dem Pfeil Pf2 von unten nach oben mit Schlichte auf. Der Schwimmer 16 wird mit dem Flüssigkeitsspiegel im Meßrohr 1 angehoben. Die Zeit, innerhalb welcher der Schwimmer 16 bis zur Position des oberen Grenzschalters 2 angehoben und dadurch das Meßrohr 1 mit Schlichte gefüllt wird, kann als Ansaugzeit oder auch als jeweilige Füllzeit bezeichnet werden. Das Meßrohr 1 und sein Öffnungsquerschnitt sowie auch die Zuführ- und Abführleitungen sind so dimensioniert, daß diese Ansaugzeit einer experimentell bestimmten optimalen Auslaufzeit der Schlichte 3 entspricht, die vom Schlichte-Hersteller angegeben wird. Diese optimale Auslaufzeit ist also die Referenzzeit, mit welcher die gemessene Ansaugzeit jeweils verglichen wird. Gegebenenfalls könnte auch eine andere, einer optimalen Schlichte entsprechende Referenzzeit gewählt werden, nämlich diejenige Referenzzeit, die sich bei anderen Abmessungen der Leitungen und des Querschnittes des Meßrohres 3 für eine optimale Schlichte ergeben.

Nach einer bestimmten Zahl von Messungen, bevorzugt nach jeder Messung, kann das Meßrohr 1 mit der Trägerflüssigkeit 5, zum Beispiel Wasser oder Alkohol je nach Schlichtetyp, gespült und gereinigt werden. Während dieser Spülung sind die Ventile 10 und 11 geöffnet, die Ventile 12 und 13 jedoch vorzugsweise geschlossen. Somit kann diese zum Spülen dienende Trägerflüssigkeit 5, nachdem sie das Meßrohr 1 entgegen der Füllrichtung durchflossen und gespült hat, entweder über die Leitung 21 in den Vorratsbehälter 9 gelangen oder über eine gestrichelt angedeutete Leitung 22 bei geschlossenem Ventil 23 über ein weiteres Ventil 24 abgeführt werden.

Die Meßergebnisse werden der zentralen SPS-Steuerung der Produktionsanlage mitgeteilt. Falls der Meßwert oder Mittelwert der Messungen kleiner als der Sollwert ist, wird in den Vorratsbehälter 9 - über die Steuerung automatisch - dickerflüssige Schlichte 17 aus dem zweiten Vorratsbehälter 4 mit Hilfe der Förderpumpe 7 zugeführt. Während dieser Zugabe dickerflüssiger Schlichte 17 sind die Ventile 15 und 18 geöffnet und das Ventil 19 geschlossen.

Der Homogenisierungszustand dieser dickerflüssigen Schlichte 17 kann durch Zirkulation über die Förderpumpe 7 bei geöffnetem Ventil 15 und geschlossenem Ventil 18 und somit über das Ventil 19 entlang der Leitung 25 und/oder durch Umrühren mit einem Rührwerk 8 aufrechterhalten oder eingestellt werden.

Ergibt die Messung am Meßrohr 1 einen größeren Wert oder Mittelwert, als es dem Sollwert oder der Referenzzeit entspricht, wird automatisch Trägerflüssigkeit 5 mit Hilfe der Förderpumpe 20 über die Abzweigung 21d bei geschlossenem Ventil 11 und geöffnetem Ventil 13 in den Vorratsbehälter 9 eingeführt.

Die Zugabe von dickerflüssiger Suspension 17 und/oder Trägerflüssigkeit 5 kann periodisch und innerhalb korrigierender Messungen der Ansaugzeit erfolgen.

Es ist also bei der Vorrichtung eine nicht näher dargestellte Steuerung vorgesehen, die nach einer vorgegebenen Anzahl von Messungen, insbesondere nach jeder Messung, automatisch die Verbindung des Meßrohres 1 mit der Zuleitung der Spülflüssigkeit 5 öffnet, wobei zwischen dem Zutritt der Spül- und Trägerflüssigkeit 5 und dem ersten Vorratsbehälter 9 eine ein öffenbares Ventil 13 enthaltende Leitung 21e vorgesehen ist und dieses Ventil 13 von der Steuerung bei zu langsamer Füllzeit öffenbar ist. Die Verbindungsleitung 26 von dem zweiten Vorratsbehälter 4 zu dem ersten Vorratsbehälter 9 kann ebenfalls durch diese Steuerung öffenbar sein und zwar bei zu kurzer Füllzeit, so daß die Suspension 3 durch dickerflüssige Suspension 17 wieder mit einer etwas höheren Viskosität versehen wird.

Somit wird ein Verfahren zur Messung und/oder Überwachung des Homogenisierungszustandes einer Suspension 3 zum Beispiel in der Gießereitechnik ermöglicht, indem die Zeit gemessen wird, die eine vorgegebene Menge der Suspension 3 zum Fließen über eine bestimmte Meßstrecke benötigt, wobei eine gegenüber einer Referenzzeit zu lange Zeit bedeutet, daß die Suspension 3 zu dick ist, während eine zu kurze Meßzeit anzeigt, daß die Suspension 3 zu dünn ist. Dabei wird ein Meßgefäß oder Meßrohr 1 mit der zu prüfenden Suspension 3 oder Schlichte gefüllt, die Füllstandszunahme erfaßt, die Zeit für einen vorgegebenen Füllungsgrad ermittelt und mit einer Referenzzeit verglichen, die sich beim Einfüllen einer optimalen Suspension 3 oder Schlichte in das Meßgefäß oder -rohr 1 mit gleichem Füllungsgrad ergibt.

Für eine möglichst genaue und wiederholbare Messung wird dabei die Suspension 3 in das Meßgefäß 1 oder Meßrohr mit einer laminaren Strömung und einer konstanten Druckdifferenz zwischen der Zuführleitung 21 und dem Meßgefäß oder Meßrohr 1 eingefüllt. Somit entstehen keine die Messung verfälschenden Turbulenzen. Im Ausführungsbeispiel wird diese möglichst gleichmäßige oder laminare Strömung dadurch erreicht, daß die Suspension 3 beim Einfüllen in das Meßgefäß oder -rohr 1 in dieses eingesaugt wird. Dabei wird dieses Meßgefäß 1 im Bereich seiner Meßstrecke von unten nach oben verlaufend angeordnet und von unten her gefüllt, so daß durch die Schwerkraft ein definierter Flüssigkeitspiegel gebildet wird, dessen Ansteigen gut erkannt und beispielsweise mit einem Schwimmer 16 angezeigt werden kann, so daß die Zeit gemessen werden kann, die der Spiegel der Suspension 3 zum Ansteigen von einem unteren Ausgangspunkt oder Grenzschalter 2 zu einem oberen Endpunkt oder Grenzschalter 2 der Meßstrecke beim Einfüllen benötigt.

Diese ermittelte Meßzeit kann mit einer Sollzeit für die Füllzeit, insbesondere in einem Steuer- oder Regelgerät verglichen werden, so daß im Falle einer zu langen Füllzeit die Suspension verdünnt oder im Falle einer zu kurzen Füllzeit mit dickerflüssiger Suspension vermischt werden kann.

Damit eine Messung nicht durch Rückstände aus der Suspension einer vorhergehenden Messung verfälscht werden kann, kann insbesondere nach jeder Messung die Meßstrecke mit Trägerflüssigkeit 5 der Suspension 3 gespült und dadurch die Meßstrecke automatisch gereinigt werden. Dabei kann die zum Spülen der Meßstrecke dienende Trägerflüssigkeit 5 in den Vorratsbehälter 9 der Suspension 3 geleitet werden, was zum Auffüllen dieses Behälters 9 beitragen kann.

Als Referenzzeit zum Vergleichen mit der beim Füllen der Meßstrecke ermittelten Meß- oder Füllzeit kann die optimale Auslaufzeit der Suspension 3 oder Schlichte aus einem Meßbehälter oder Meßbecher experimentell, beispielsweise schon durch den Hersteller dieser Suspension, ermittelt werden. Als Füll- oder Ansaugzeit kann für diese optimale Suspension oder Schlichte dann die ermittelte Auslaufzeit verwendet werden, das heißt die Dimensionierungen der Leitungen 21 und 21a sowie des Meßrohres 1 können so abgestimmt werden, daß die optimale Füllzeit dieser optimalen Auslaufzeit entspricht.

Es ist aber auch möglich, für anders dimensionierte Meßrohre 1 und Leitungen 21 und 21a die Referenzzeit dadurch zu ermitteln, daß zunächst eine Messung mit einer optimal eingestellten Suspension 3 durchgeführt wird. Spätere Abweichungen von einer so ermittelten Referenzzeit können dann in gleicher Weise verfahrensmäßig dazu benutzt werden, die jeweils untersuchte Suspension 3 zu verdünnen oder zu verdicken, um auch mit ihr eine Füllzeit zu erzielen, die der optimalen Füllzeit einer optimalen Suspension entspricht.

Sowohl das Verfahren als auch die Vorrichtung sind im Aufbau und in der Bedienung einfach und ermöglichen eine ständige Überwachung des Homogenisierungszustandes einer Suspension 3 und auch einer automatischen Korrektur der Viskosität der Suspension, wenn diese aufgrund der Messungen nicht mehr dem optimalen Wert entspricht.

Zur Messung und/oder Überwachung des Homogenisierungszustandes einer Suspension 3 oder Schlichte in der Gießereitechnik wird die Zeit gemessen, die eine vorgegebene Menge dieser Suspension 3 bei einem Fließen benötigt, wobei ein Meßgefäß oder Meßrohr 1 mit der zu prüfenden Suspension 3 gefüllt wird, also diese Suspension 3 von unten nach oben fließt, so daß die Füllstandszunahme in einer Meßstrecke erfaßt werden kann. Dabei wird die Zeit für einen vorgegebenen Füllungsgrad dieser Meßstrecke ermittelt und mit einer Referenzzeit verglichen, die sich beim Einfüllen einer optimalen Vergleichs-Suspension 3 bei gleichem Füllungsgrad ergeben würde oder ergibt. Zweckmäßigerweise erfolgt dabei die Füllung der Meßstrecke mit einer gleichmäßigen oder laminaren Strömung insbesondere durch Einsaugen der Suspension, wobei sie von unten her in die Meßstrecke eintritt und nach oben abgesaugt wird.

## Patentansprüche

1. Verfahren zur Messung und/oder Überwachung des Homogenisierungszustandes einer Suspension (3) oder Schlichte in der Gießereitechnik, welche aus einem pulverförmigen, feuerfesten Füllstoff, einem bindenden Werkstoff sowie einer Trägerflüssigkeit, z.B. Wasser oder Alkohol, besteht, wobei die Zeit gemessen wird, die eine vorgegebene Menge der Suspension (3) oder Schlichte bei einem Fließen benötigt und eine gegenüber einer Referenzzeit zu lange Zeit eine zu dick aufbereitete und eine zu kurze Zeit eine zu dünne Suspension (3) oder Schlichte bedeutet, **dadurch gekennzeichnet**, daß ein Meßgefäß oder Meßrohr (1) mit der zu prüfenden Suspension (3) oder Schlichte gefüllt, die Füllstandszunahme erfaßt, die Zeit für einen vorgegebenen Füllungsgrad ermittelt und mit einer Referenzzeit verglichen wird, die sich beim Einfüllen einer optimalen Suspension (3) oder Schlichte in das Meßgefäß oder -rohr (1) mit gleichem Füllungsgrad ergibt.

2. Verfahren nach Anspruch 1, dadurch gekennzeichnet, daß die Suspension (3) in das Meßgefäß oder Meßrohr (1) mit einer laminaren Strömung und einer konstanten Druckdifferenz zwischen der Zuführleitung (21) und dem Meßgefäß oder Meßrohr (1) eingefüllt wird.

3. Verfahren nach Anspruch 1 oder 2, dadurch gekennzeichnet, daß die Suspension (3) beim Einfüllen in das Meßgefäß oder -rohr (1) in dieses eingesaugt wird.

4. Verfahren nach einem der Ansprüche 1 bis 3, dadurch gekennzeichnet, daß das Meßgefäß oder Meßrohr (1) zumindest im Bereich seiner Meßstrecke von unten nach oben verlaufend angeordnet und von unten her gefüllt wird.

5. Verfahren nach einem der Ansprüche 1 bis 4, dadurch gekennzeichnet, daß die Zeit gemessen wird, die der obere Spiegel der Suspension (3) zum Ansteigen von einem unteren Ausgangspunkt oder Grenzschalter (2) zu einem oberen Endpunkt oder Grenzschalter (2) beim Einfüllen in die Meßstrecke benötigt.

6. Verfahren nach einem der Ansprüche 1 bis 5, dadurch gekennzeichnet, daß die ermittelte Zeit mit einem Sollwert für die Füllzeit, insbesondere in einem Steuer- oder Regelgerät, verglichen wird und daß im Falle einer zu langen Füllzeit Verdünnung und im Falle einer zu kurzen Füllzeit dickerflüssiger Suspension der zu benutzenden Suspension zugemischt wird.

7. Verfahren nach einem der Ansprüche 1 bis 6, dadurch gekennzeichnet, daß die Meßstrecke von Zeit zu Zeit, insbesondere nach jeder Messung, mit der Trägerflüssigkeit (5) der Suspension (3) gespült und dadurch die Meßstrecke automatisch gereinigt wird.

8. Verfahren nach einem der Ansprüche 1 bis 7, dadurch gekennzeichnet, daß die zum Spülen der Meßstrecke dienende Trägerflüssigkeit (5) in den Vorratsbehälter (9) der Suspension (3) geleitet wird.

9. Verfahren nach einem der Ansprüche 1 bis 8, dadurch gekennzeichnet, daß als Referenzzeit die optimale Auslaufzeit der Suspension (3) oder Schlichte aus einem Meßbehälter oder Meßbecher experimentell ermittelt wird und daß als Füll- oder Ansaugzeit für diese optimale Suspension oder Schlichte die ermittelte Auslaufzeit verwendet wird.

10. Vorrichtung zum Überwachen des Homogenisierungszustandes von Suspensionen (3) für die Gießereitechnik, welche Suspension oder Schlichte wenigstens einen pulverförmigen, feuerfesten Füllstoff, bindendes Material sowie eine Trägerflüssigkeit umfaßt und daraus gemischt ist, insbesondere zur Durchführung des Verfahrens gemäß einem der vorstehenden Ansprüche, **dadurch gekennzeichnet**, daß ein Meßgefäß oder Meßrohr (1) mit einer von unten nach oben gerichteten Meßstrecke und einem Einlaß sowie einem Auslaß für die Suspension vorgesehen ist und daß an der Meßstrecke Grenzschalter (2) für die Füllstandhöhe vorgesehen sind, die mit einem Zeitmeßgerät derart gekoppelt sind, daß die zum Füllen von einem Grenzschalter (2) zu dem anderen benötigte Zeit erfaßbar ist.

11. Vorrichtung nach Anspruch 10, dadurch gekennzeichnet, daß ein vertikal angeordnetes Meßgefäß oder Meßrohr (1) vorgesehen ist, in dessen unterem Bereich der Beginn der Meßstrecke und der Einlaß für die Suspension (3) und an dessen Oberseite der Auslaß angeordnet sind und daß zum Füllen eine Pumpe (6) dient.

12. Vorrichtung nach Anspruch 10 oder 11, dadurch gekennzeichnet, daß die zum Füllen dienende Pumpe eine Saugpumpe ist, die in einer von dem Auslaß des Meßgefäßes oder Meßrohres (1) ausgehenden Leitung (21) angeordnet ist.

13. Vorrichtung nach einem der Ansprüche 10 bis 12, dadurch gekennzeichnet, daß ein Vorratsbehälter (9) für die Suspension vorgesehen ist, von welchem eine Leitung (21) zu dem unteren, insbesondere an der Unterseite angeordneten Einlaß des Meßgefäßes oder Meßrohres (1) führt, und daß die Auslaßleitung (21a) der Saugpumpe in den Vorratsbehälter führt oder mündet.

14. Vorrichtung nach einem der Ansprüche 10 bis 13, dadurch gekennzeichnet, daß zum Betätigen der Grenzschalter ein Schwimmer (16) in dem Meßgefäß oder Meßrohr (1) angeordnet ist, der insbesondere berührungslos mit den Grenzschaltern zusammenwirkt.

15. Vorrichtung nach einem der Ansprüche 10 bis 14, dadurch gekennzeichnet, daß der Schwimmer (16) wenigstens teilweise aus Metall besteht oder Metall enthält und mit induktiven Grenzschaltern (2) zusammenwirkt.

16. Vorrichtung nach einem der Ansprüche 10 bis 15, dadurch gekennzeichnet, daß optisch wirksame Grenzschalter, insbesondere Lichtschranken oder dergleichen, zum Zusammenwirken mit einem insbesondere undurchsichtigen und/oder reflektierenden Schwimmer (16) vorgesehen sind.

17. Vorrichtung nach einem der Ansprüche 10 bis 16, dadurch gekennzeichnet, daß die Leitung (21a) zum Einfüllen und Anführen der Schlichte von der Meßstrecke mit einer Zulaufleitung (21c) für Spülflüssigkeit verbunden ist, die insbesondere über ein Ventil (11) abschalt- und zuschaltbar ist.

18. Vorrichtung nach einem der Ansprüche 10 bis 17, dadurch gekennzeichnet, daß ein zweiter Vorratsbehälter (4) für dickerflüssige Suspension (17) vorgesehen ist, der über eine Leitung (26) und insbesondere über eine in dieser Leitung (26) angeordnete Förderpumpe (7) sowie über Ventile (15,18) mit dem ersten Vorratsbehälter (9) verbunden ist und daß die Ventile (15,18) und die Förderpumpe (7) in der von dem zweiten Vorratsbehälter zu dem ersten Vorratsbehälter führenden Leitung durch die Steuerung oder Regelung angesteuert sind, die die Füllzeit in der Meßstrecke ermittelt.

19. Vorrichtung nach einem der Ansprüche 10 bis 18, dadurch gekennzeichnet, daß in dem zweiten Vorratsbehälter (4) ein Rührwerk (8) angeordnet und/oder an der zu dem ersten Vorratsbehälter (9) führenden Leitung (26) eine Rückführleitung (25) zurück in den zweiten Vorratsbehälter (4) zum Umpumpen der dickflüssigeren Suspension (17) abgezeigt ist.

20. Vorrichtung nach einem der Ansprüche 10 bis 19, dadurch gekennzeichnet, daß eine Steuerung vorgesehen ist, die nach einer vorgegebenen Anzahl von Messungen, insbesondere nach jeder Messung, automatisch die Verbindung des Meßrohres (1) mit der Spülflüssigkeit (5) öffnet, daß zwischen dem Zutritt der Spül- und Trägerflüssigkeit (5) und dem ersten Vorratsbehälter (9) eine ein öffenbares Ventil (13) enthaltende Leitung (21e) vorgesehen ist und dieses Ventil (13) von der Steuerung bei zu langsamer Füllzeit öffenbar ist und daß schließlich die Verbindungsleitung (26) von dem zweiten Vorratsbehälter (4) zu dem ersten Vorratsbehälter (9) durch die Steuerung bei zu kurzer Füllzeit öffenbar ist.

21. Vorrichtung nach einem der Ansprüche 10 bis 20, dadurch gekennzeichnet, daß die Querschnitte der Meßstrecke und/oder des Einlasses sowie gegebenenfalls der Zuleitung (21) zu dem Einlaß und des Auslasses so dimensioniert sind, daß die Füllzeit, insbesondere die Ansaugzeit, der experimentell bestimmten Auslaufzeit einer optimalen Schlichte oder Suspension, insbesondere der vom Hersteller angegebenen Auslaufzeit, entspricht.
